(19) Europäisches Patentamt
European Patent Office
Office européen des brevets

(11) EP 2 273 303 B1

(12) **FASCICULE DE BREVET EUROPEEN**

(45) Date de publication et mention de la délivrance du brevet:
**21.08.2013 Bulletin 2013/34**

(51) Int Cl.:
***G02B 27/01*** *(2006.01)*

(21) Numéro de dépôt: **10168089.0**

(22) Date de dépôt: **01.07.2010**

(54) **Viseur tête haute à combinaison optique assurant la protection contre l'éclairement solaire**

Head-up-Anzeige, die den Schutz gegen Sonnenstrahlung gewährleistet

Head-up display providing protection against solar radiation

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **10.07.2009 FR 0903424**

(43) Date de publication de la demande:
**12.01.2011 Bulletin 2011/02**

(73) Titulaire: **Thales**
**92200 Neuilly Sur Seine (FR)**

(72) Inventeurs:
- **Dominici, Johanna**
**33320 Eysines (FR)**
- **Ebert, Jean-Claude**
**33160 St Medard en Jalles (FR)**
- **Perbet, Jean-Noël**
**33320 Eysines (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 1 619 533** **EP-A2- 0 467 328**
**JP-A- 11 091 402** **JP-B- 7 017 164**
**US-A1- 2004 017 282**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Le domaine de l'invention se situe dans le domaine des viseurs tête haute, connu sous le terme anglais de « Head-Up Displays » ou « HUDs ». Ces appareils sont principalement utilisés dans les secteurs automobile et aéronautique.

La fonction d'un HUD est de permettre au pilote de voir des informations importantes sans perdre de vue l'environnement extérieur. Pour assurer cette fonction, les informations issues d'un imageur sont projetées sur un élément optique semi-transparent encore appelé « combiner » à l'aide d'un système optique ou optique-relais. En utilisation de jour, ces informations sont essentiellement de la symbologie. Après réflexion sur le combiner, les faisceaux optiques sont collimatés, c'est-à-dire projetés à l'infini de façon que le pilote puisse visualiser la symbologie et le paysage en même temps, sans avoir à accommoder visuellement.

Il existe deux types de combiners. Les combiners du premier type sont des lames planes sans puissance optique. Les combiners du second type sont des lames courbes ayant une certaine puissance optique. Dans la suite de la description, on appellera « boîte à oeil » la zone dans laquelle se forme l'image collimatée destinée à être vue par le pilote.

La configuration de certains cockpits d'avions équipés d'un HUD est telle que, dans certaines conditions, une partie du rayonnement solaire peut être focalisée sur la surface de l'imageur, à l'intérieur même du HUD. Ceci se produit lorsque les rayons solaires font le trajet inverse de la lumière issue de l'afficheur soit en traversant le combiner soit en se réfléchissant sur lui. Le premier cas en transmission n'est gênant que si le combiner est une lame plane. Le deuxième cas en réflexion est illustré en figure 1. Le viseur ou HUD de la figure 1 comporte un imageur 1, une optique-relais 2 comprenant un ensemble dioptrique 21 et un miroir de renvoi 22 et un combiner courbe 3. Lorsque l'imageur est passif, comme c'est le cas des écrans à cristaux liquides, il peut comporter une boîte à lumière 5 qui assure l'éclairage de l'imageur. Comme on le voit sur cette figure 1, si les rayons solaires 11 pénètrent la boîte à oeil puis se réfléchissent sur le combiner 3, ils se focalisent sur l'imageur 1. Ils ne peuvent pénétrer la boîte à oeil que lorsque le pilote ne s'y trouve pas, c'est-à-dire, par exemple, en vol quand il déplace sa tête ou bien au sol quand il n'y a pas de pilote dans le cockpit. Dans les deux cas, les rayons solaires font alors le trajet inverse de celui des informations projetées sur le combiner, ce qui signifie qu'ils traversent le système optique puis sont focalisés sur la surface d'affichage des informations. Cette surface d'affichage peut être de différente nature, plus ou moins résistante à l'éclairement solaire. Elle peut alors être endommagée, de façon réversible ou non, par le rayonnement solaire entrant dans le HUD. Il est donc indispensable de mettre en place une protection du HUD contre l'éclairement solaire.

Pour éviter ce problème, les solutions existantes consistent à réduire les coefficients de transmission et/ou de réflexion du système optique, de façon permanente ou en fonction de l'éclairement solaire reçu.

La première solution décrite dans le brevet « Method and apparatus for attenuating solar flux in a Head-Up Display » (US 6,574,048 B2) repose sur la diminution du coefficient de réflexion d'un miroir composant le système optique d'un HUD. La perte de luminosité induite est compensée par une augmentation de la luminance de la source de lumière, ce qui a pour inconvénient d'augmenter la consommation électrique.

Dans une deuxième solution décrite dans le brevet « Electrically dimmable combiner optics for head-up display » (WO/2008/109231 A2), on commande électriquement la transmission du combiner. Cette méthode sert initialement à augmenter le contraste du HUD en présence d'un paysage fortement lumineux en réduisant la luminosité du paysage extérieur sans diminuer la luminosité de la symbologie, puisque le coefficient de réflexion du combiner n'est pas affecté par la variation du coefficient de transmission. Cette technique est donc applicable dans le cas de rayons solaires traversant un combiner plan, mais ne l'est pas dans le cas d'une réflexion sur le combiner.

Une troisième solution décrite dans le brevet « Diffraction Head-Up Display solar radiation filter » (WO/1984/002197) consiste en l'introduction, dans ou près du plan focal objet, entre la surface d'affichage des informations et le système optique, d'une matrice transmissive de photo détecteurs à cristaux liquides ou d'un matériau photochromique, c'est-à-dire qui s'assombrit ou s'éclaircit en fonction de l'éclairement lumineux reçu. L'inconvénient majeur de cette méthode est le temps mis par le matériau photochromique pour redevenir transparent lorsqu'il ne reçoit plus d'éclairement solaire. Il en résulte une zone dans laquelle les informations ne sont plus affichées pendant un certain temps, ce qui peut considérablement gêner le pilote.

Le dispositif selon l'invention ne présente pas les inconvénients des dispositifs précédents. Le dispositif selon l'invention réside d'une part dans l'utilisation d'un afficheur monochromatique et d'autre part, dans l'introduction et l'utilisation du chromatisme du système optique pour agrandir la tache image du soleil sur l'imageur. On diminue ainsi la valeur de l'éclairement solaire au niveau de la surface d'affichage des informations, tout en ne dégradant pas les informations à afficher.

Plus précisément, l'invention a pour objet un système de visualisation de type Tête Haute tel que défini dans la revendication 1.

Avantageusement, l'afficheur émet dans au moins un second spectre optique de seconde largeur spectrale, le chromatisme latéral du système optique étant suffisamment faible pour que la dispersion du second spectre émis par l'afficheur et vu par un utilisateur soit inférieure ou égale à la limite de résolution de l'oeil humain.

Avantageusement, le combiner comporte au moins une lame plane semi-réfléchissante ou au moins une lame courbe semi-réfléchissante.

Avantageusement, le système optique comprend au moins un élément optique prismatique.

Avantageusement, l'afficheur comprend un écran plat matriciel éclairé par une ou plusieurs sources monochromatiques à bande étroite, par exemple des lasers ou diodes laser d'un premier type, émettant à une première longueur d'onde. L'écran plat matriciel peut également être éclairé par un ou plusieurs sources monochromatiques comme des lasers ou des diodes laser d'un second type, émettant à une seconde longueur d'onde, différente de la première longueur d'onde.

Enfin, le système comprend des moyens de génération d'une image numérique sur ledit afficheur, lesdits moyens comprenant des moyens d'appliquer une correction de distorsion sur l'image, ladite correction étant fonction de la distorsion géométrique et du chromatisme latéral de l'ensemble optique comprenant le système optique et le combiner.

L'invention sera mieux comprise et d'autres avantages apparaîtront à la lecture de la description qui va suivre donnée à titre non limitatif et grâce aux figures annexées parmi lesquelles :

La figure 1 représente un viseur tête haute selon l'art antérieur soumis à l'éclairement solaire ;
La figure 2 représente un viseur tête haute à combiner courbe selon l'invention soumis à l'éclairement solaire ;
La figure 3 représente un viseur tête haute à combiner plan selon l'invention soumis à l'éclairement solaire ;
La figure 4 représente l'étalement de la tache image du soleil sur l'afficheur dans un viseur selon l'invention ;
Le figure 5 représente le rapport des aires des taches solaires avant et après étalement, en fonction de l'angle d'incidence du faisceau sur un prisme d'angle donné ;

Le graphique de la figure 6 représente les déviations induites par le chromatisme sur les informations à afficher par rapport à la limite de résolution de l'oeil humain, en fonction de l'angle d'incidence du faisceau sur le prisme précédent.

Le dispositif selon l'invention comprend un système optique possédant un fort chromatisme latéral. La dispersion du rayonnement solaire par le système optique a pour effet d'agrandir ou d'étaler l'image du soleil formée dans le plan focal du système optique, c'est-à-dire sur la surface d'affichage de l'imageur. Le flux solaire reçu reste inchangé mais la surface éclairée est augmentée d'où une diminution de l'éclairement solaire. Cependant, de façon que le chromatisme du système optique ne dégrade pas l'image issue de l'imageur, celui-ci émet dans un premier spectre optique de largeur spectrale très étroite. On peut, par exemple, utiliser une source laser monochromatique.

Le chromatisme latéral du système optique peut être obtenu de façon naturelle. En effet, lorsque le combineur est une lame courbe semi-réfléchissante ayant un hors d'axe important, pour compenser les aberrations géométriques de cette lame, le système optique peut comporter des lentilles fortement excentrées ou dissymétriques. Compte-tenu de leur forme, ces éléments ont naturellement un chromatisme latéral important qu'il suffit d'optimiser par le choix des matériaux, des inclinaisons et des rayons de courbure des dioptres.

Si ce n'est pas le cas, il est possible d'introduire dans la combinaison optique du système optique un prisme supplémentaire comme on le voit sur les figures 2 et 3. Le HUD de la figure 2 comporte un combiner 3 à lame courbe. Dans cette configuration, le prisme 4 est traversé par un ensemble de faisceaux solaires convergents provenant de la réflexion sur le combineur. Le HUD de la figure 3 comporte un combiner 3 à lame plane. Dans cette configuration, le prisme 4 est traversé par un ensemble de faisceaux solaires parallèles provenant de la réflexion sur le combineur. Comme on le voit sur ces figures, après traversée du prisme, chaque rayon lumineux 11 polychromatique est dévié différemment en fonction de sa longueur d'onde. Sur les figures, trois rayons 12 représentant trois longueurs d'onde différentes ont été représentés en traits continus, en traits pointillés et en tirets. Ces rayons se focalisent à des emplacements différents notés M, M'et M" sur l'imageur.

Dans les deux cas, le chromatisme introduit par le prisme est sensiblement le même. On peut déterminer les ordres de grandeur de ce chromatisme.

Pour des raisons de simplicité, les calculs sont faits dans le cas particulier d'un HUD à combiner plan avec un prisme introduit entre le combiner et le système optique, c'est-à-dire la configuration de la figure 3. Bien entendu, il est possible d'étendre ce calcul à d'autres configurations sans difficultés particulières.

En se réfléchissant sur le combiner, le spectre du soleil est filtré et se compose des seules longueurs d'onde présentes dans la réflexion spectrale du combiner. Généralement, les combiners sont adaptés pour travailler avec des sources d'images monochromes émettant dans le vert, là où la sensibilité de l'oeil est maximale. Plus récemment, il existe des HUDs à afficheurs et combiners bichromes permettant de réfléchir à la fois une bande spectrale située dans le vert et une seconde bande spectrale située dans le rouge, la couleur rouge étant dédiée aux alarmes affichées. Plus précisément, les deux bandes spectrales communément retenues sont une première bande « verte » qui s'étend de 510 nm à 550 nm et une seconde bande « rouge » qui s'étend de 600nm à 635nm. Si l'afficheur est une cellule matricielle à cristaux liquides, l'éclairement maximal tolérable au niveau de la surface d'affichage des informations vaut environ

40kW/m$^2$. L'éclairement solaire maximal en l'absence de dispersion chromatique du système optique vaut environ 70kW/m$^2$ dans la bande verte et 140kW/m$^2$ dans les deux bandes. Le prisme doit donc introduire un chromatisme suffisant pour étaler la tache solaire sur l'afficheur d'un facteur 1,75 en monochrome et 3,5 en bichrome.

Il est à noter que le problème est légèrement différent lorsque les rayons solaires traversent le combiner pour entrer dans le HUD car la réponse spectrale du combiner est différente en réflexion et en transmission. La solution est alors d'ajouter, dans le système optique, un filtre dont la réponse spectrale en transmission est identique à la réponse spectrale en réflexion du combiner. Ce filtre peut être déposé sur le prisme 4, par exemple. Ce filtre ne gêne en rien l'affichage des informations et permet d'avoir un éclairement solaire en transmission égal ou inférieur à celui en réflexion. Le problème devient alors identique dans les deux configurations, et peut être traité de la même façon.

Les calculs de chromatisme sont faits avec un système optique de focale 100 mm et avec un prisme d'angle au sommet A de 40° en verre. Le verre est fabriqué par la société Sumita et sa référence est K-PSFn214. Son indice de réfraction n est défini par l'équation suivante :

$$n(\lambda) = n_0 + \frac{B}{\lambda^2}$$

où $\lambda$ représente la longueur d'onde du faisceau incident, et $n_0$ et B sont des constantes caractéristiques du matériau ayant les valeurs suivantes $n_0$=2,046 (sans unités) et B=0,0336 $\mu$m$^2$.

Le prisme dévie les faisceaux lumineux incidents avec un angle i d'un angle D, dépendant de la longueur d'onde de chaque faisceau selon la formule suivante :

$$D(\lambda) = i - A + \arcsin\left[n(\lambda) \times \sin\left(A - \arcsin\left(\frac{\sin i}{n(\lambda)}\right)\right)\right]$$

L'étalement de la tache image du soleil $T_S$ qui en résulte est représenté sur la figure 4. A gauche, on a représenté la tache solaire $T_S$ en l'absence de prisme et à droite on a représenté la tache solaire $T_{SP}$ avec le prisme. Dans un HUD dépourvu de chromatisme latéral ou possédant un très faible chromatisme, la tache $T_S$ du soleil, composée de toutes les longueurs d'onde a une surface Aire2 identique à la tache produite par une seule longueur d'onde de surface Aire1. Autrement dit, les taches images $T_S(\lambda_i)$ produites par chacune des longueurs d'onde $\lambda_i$ sont identiques et se superposent au même endroit sur la surface d'affichage des informations du HUD. Dans un HUD possédant du chromatisme latéral, la tache du soleil $T_{SP}$, composée de toutes les longueurs d'onde, a une surface k.Aire2 supérieure d'un facteur k à la tache produite par une seule longueur d'onde de surface Aire1. Lorsque le spectre solaire, filtré par le combiner, est monochrome et centré sur une longueur d'onde $\lambda_V$, la tache solaire $T_{SP}(\lambda_V)$ a une forme oblongue. Lorsque le spectre est bichrome, la tache solaire TSP($\lambda_V$+$\lambda_R$) comporte deux formes oblongues $T_{SP}(\lambda_V)$ et $T_{SP}(\lambda_R)$, comme indiqué sur la figure 4, centrées sur les taches images aux longueurs d'ondes $\lambda_V$ et $\lambda_R$. k est le facteur de réduction de l'éclairement solaire.

Les résultats obtenus sont illustrés sur la figure 5 qui représente le facteur k pour un angle d'incidence i compris entre 30 et 80 degrés en monochrome (courbes en pointillés) et en bichrome (courbe en trait continu). On voit que le facteur de réduction de l'éclairement solaire est toujours supérieur à 2 en monochrome et supérieur à 4 en bichrome. Ainsi, l'éclairement solaire chute à moins de 35kW/m$^2$ en monochrome ou en bichrome. L'introduction du prisme résout donc bien le problème de l'éclairement solaire en le diminuant sous le seuil de tolérance de la surface d'affichage des informations, à savoir 40kW/m$^2$.

Il est très important que les informations à afficher ne soient pas altérées par le chromatisme que l'on vient d'introduire.

Les sources laser telles que les diodes laser ont des largeurs spectrales très faibles. On peut aussi utiliser des sources monochromatiques filtrées pour obtenir une bande spectrale étroite. On entend par bande spectrale étroite une largeur d'émission spectrale à mi-puissance ne dépassant pas quelques nanomètres. Il est à noter que, lorsque les sources sont quasiment monochromatiques et donc fortement cohérentes, des phénomènes parasites peuvent apparaître comme le « speckle » qui représente une granularité d'image. On peut fortement le réduire en utilisant plusieurs sources d'éclairage incohérentes entre elles pour un même afficheur. On moyenne ainsi fortement les effets indésirables du « speckle ».

Les sources vertes sont utilisées dans les HUDs monochromes et les deux sources verte et rouge sont utilisées dans les HUDs bichromes. Si les sources de lumière monochromatiques de l'afficheur ont les caractéristiques spectrales suivantes :

Source verte : 530nm ± 1nm
Source rouge : 617nm ± 1nm.

Alors, la déviation D induite par le prisme est représentée sur les deux courbes en pointillés de la figure 6. La limite de résolution de l'oeil est représentée en traits gras. On voit que pour des angles d'incidence compris entre 50° et 80°, la déviation maximale des sources verte et rouge est de l'ordre de la limite de résolution de l'oeil qui varie entre 1 et 3 minutes d'arc selon les personnes, soit entre 0,3 mrad et 0,9 mrad. La déviation induite étant négligeable comparée à la largeur de trace du HUD, la qualité des images affichées n'est pas affectée par l'introduction de chromatisme.

Selon le besoin de diminution de l'éclairement solaire, qui varie d'un système à un autre, différents matériaux optiques peuvent être employés pour la fabrication de l'élément optique à forte dispersion chromatique, car celle-ci (respectivement l'éclairement solaire) sera d'autant plus importante (respectivement faible) que l'indice de réfraction sera grand et le nombre d'Abbe petit. Pour un prisme, la dispersion dépend aussi de son angle au sommet et de l'angle d'incidence des rayons.

Cependant, si le chromatisme ne dégrade pas la qualité de l'image à afficher, l'élément optique qui apporte ce chromatisme peut quant à lui introduire des aberrations comme la distorsion. Dans le cas d'un prisme, la déviation dépend de l'angle d'incidence des faisceaux et introduit ainsi de la distorsion. Elle dépend aussi de la longueur d'onde. Cette aberration peut être compensée en calculant la déformation inverse et en l'appliquant préalablement à l'image sur la surface d'affichage des informations. En appliquant une déformation différente pour les différentes longueurs d'onde de l'image, les aberrations de l'image finale en sortie du HUD peuvent être totalement compensées.

Ce dispositif a l'avantage de ne pas recourir à une quelconque détection comme, par exemple, la détection d'un éclairement solaire supérieur au seuil de tolérance de la surface d'affichage, la détection du pilote, .... Il n'y a donc ni capteur ni système électronique à ajouter.

De plus, la diminution de l'éclairement est instantanée et n'affecte pas la qualité de l'image projetée en utilisant une source de lumière monochromatique. En effet, avec une source monochromatique, l'augmentation de la largeur de trace due au chromatisme reste négligeable.

Enfin, l'introduction d'un élément à forte dispersion chromatique ne réduit quasiment pas le coefficient de transmission du système optique ce qui évite d'avoir à augmenter la consommation électrique pour obtenir le même niveau de luminance.

Ce dispositif améliore donc la résistance d'un HUD à l'éclairement solaire qu'il soit utilisé dans le domaine aéronautique ou automobile, ce qui permet l'utilisation, pour le système d'imagerie, de technologies qui ne résistent pas suffisamment aux niveaux d'éclairement solaire pouvant être rencontrés.

## Revendications

1. Système de visualisation de type Tête Haute comprenant au moins un afficheur (1), un système optique (2, 21, 22) et au moins une lame semi-réfléchissante (3) appelée combiner, réfléchissant dans un premier spectre optique de première largeur spectrale centré dans le vert, ledit système optique et ledit combiner étant agencés de façon que l'image de l'afficheur soit collimatée, l'afficheur étant une cellule matricielle à cristaux liquides agencée de façon à résister à un éclairement d'un niveau déterminé, **caractérisé en ce que** d'une part, le chromatisme latéral du système optique est suffisamment important pour que la tache solaire reçue par l'afficheur soit étalée au moins d'un facteur 1.75 dans ledit premier spectre optique réfléchi et **en ce que**, d'autre part, ledit chromatisme latéral soit suffisamment faible pour que la dispersion d'un premier spectre émis par l'afficheur et vu par un utilisateur soit inférieure ou égale à la limite de résolution de l'oeil humain.

2. Système de visualisation selon la revendication 1, **caractérisé en ce que** le combiner réfléchit également dans un second spectre optique de seconde largeur spectrale centré dans le rouge, le chromatisme latéral du système optique étant suffisamment important pour que la tache solaire reçue par l'afficheur soit étalée au moins d'un facteur 3.5 dans un domaine spectral comprenant les premier et second spectres optiques réfléchis, le chromatisme latéral du système optique étant suffisamment faible pour que la dispersion du second spectre émis par l'afficheur et vu par un utilisateur soit inférieure ou égale à la limite de résolution de l'oeil humain.

3. Système de visualisation selon l'une des revendications précédentes, **caractérisé en ce que** le combiner (3) comporte au moins une lame plane semi-réfléchissante.

4. Système de visualisation selon l'une des revendications 1 à 2, **caractérisé en ce que** le combiner (3) comporte au moins une lame courbe semi-réfléchissante.

5. Système de visualisation selon l'une des revendications précédentes, **caractérisé en ce que** le système optique comprend au moins un élément optique prismatique (4).

6. Système de visualisation selon l'une des revendications précédentes, **caractérisé en ce que** l'afficheur (1) comprend un écran plat matriciel à cristaux liquides éclairé par une source monochromatique à bande étroite.

7. Système de visualisation selon la revendication 6, **caractérisé en ce que** la source monochromatique à bande étroite comprend un ou plusieurs lasers ou diodes laser d'un premier type, émettant à une première longueur d'onde.

8. Système de visualisation selon la revendication 7, **caractérisé en ce que** l'écran plat matriciel est éclairé par un ou plusieurs lasers ou diodes laser d'un second type, émettant à une seconde longueur d'onde.

9. Système de visualisation selon l'une des revendications précédentes, **caractérisé en ce que** le système comprend des moyens de génération d'une image numérique sur ledit afficheur, lesdits moyens comprenant des moyens d'appliquer une correction de distorsion sur l'image, ladite correction étant fonction de la distorsion géométrique et du chromatisme latéral de l'ensemble optique comprenant le système optique et le combiner.

## Patentansprüche

1. Anzeigesystem des Head-up-Typs, das wenigstens ein Display (1), ein optisches System (2, 21, 22) und wenigstens eine Kombinator genannte teilreflektierende Platte (3) umfasst, die in einem ersten optischen Spektrum einer auf Grün zentrierten ersten Spektralbreite reflektiert, wobei das optische System und der Kombinator so angeordnet sind, dass das Display-Bild kollimiert wird, wobei das Display eine Flüssigkristallmatrixzelle ist, die so ausgelegt ist, dass sie eine Beleuchtung mit einem bestimmten Pegel aushält, **dadurch gekennzeichnet, dass** der laterale Chromatismus des optischen Bildes einerseits groß genug ist, damit sich der vom Display empfangene Sonnenfleck um wenigstens einen Faktor von 1,75 im ersten reflektierten optischen Spektrum ausbreitet, und dadurch, dass der laterale Chromatismus andererseits klein genug ist, damit die Dispersion eines ersten Spektrums, das vom Display emittiert und von einem Benutzer gesehen wird, gleich oder kleiner als die Auflösungsgrenze des menschlichen Auges ist.

2. Anzeigesystem nach Anspruch 1, **dadurch gekennzeichnet, dass** der Kombinator auch in einem zweiten optischen Spektrum mit einer auf Rot zentrierten zweiten Spektralbreite reflektiert, wobei der laterale Chromatismus des optischen Systems groß genug ist, damit sich der vom Display empfangene Sonnenfleck wenigstens um einen Faktor von 3,5 in einem Spektralbereich ausbreitet, der das erste und das zweite reflektierte optische Spektrum umfasst, wobei der laterale Chromatismus des optischen Systems klein genug ist, damit die Dispersion des zweiten Spektrums, das vom Display emittiert und von einem Benutzer gesehen wird, gleich oder kleiner als die Auflösungsgrenze des menschlichen Auges ist.

3. Anzeigesystem nach einem der vorherigen Ansprüche, **dadurch gekennzeichnet, dass** der Kombinator (3) wenigstens eine flache teilreflektierende Platte umfasst.

4. Anzeigesystem nach einem der Ansprüche 1 bis 2, **dadurch gekennzeichnet, dass** der Kombinator (3) wenigstens eine gekrümmte teilreflektierende Platte umfasst.

5. Anzeigesystem nach einem der vorherigen Ansprüche, **dadurch gekennzeichnet, dass** das optische System wenigstens ein prismatisches optisches Element (4) umfasst.

6. Anzeigesystem nach einem der vorherigen Ansprüche, **dadurch gekennzeichnet, dass** das Display (1) einen flachen Flüssigkristallmatrixschirm umfasst, der von einer monochromatischen Schmalbandquelle beleuchtet wird.

7. Anzeigesystem nach Anspruch 6, **dadurch gekennzeichnet, dass** die monochromatische Schmalbandquelle ein oder mehrere Laser oder Laserdioden eines ersten Typs, die mit einer Wellenlänge emittieren, umfasst.

8. Anzeigesystem nach Anspruch 7, **dadurch gekennzeichnet, dass** der flache Matrixschirm von ein oder mehreren Lasern oder Laserdioden eines zweiten Typs, die mit einer zweiten Wellenlänge emittieren, beleuchtet wird.

**9.** Anzeigesystem nach einem der vorherigen Ansprüche, **dadurch gekennzeichnet, dass** das System Mittel zum Erzeugen eines digitalen Bildes auf dem Display umfasst, wobei die Mittel Mittel zum Anwenden einer Verzerrungskorrektur auf das Bild umfassen, wobei die Korrektur von der geometrischen Verzerrung und vom lateralen 5 Chromatismus der das optische System und den Kombinator umfassenden optischen Baugruppe abhängig ist.

**Claims**

**1.** A display system of the head-up type comprising at least one display (1), one optical system (2, 21, 22) and at least one semi-reflective plate (3), designated combiner, reflecting in a first optical spectrum of first spectral width centred in the green, said optical system and said combiner being arranged so that the image on said display is collimated, said display being a liquid crystal matrix cell arranged so as to withstand illumination at a determined level, **characterised in that**, on the one hand, the lateral chromatism of the optical system is strong enough for the sunspot received by said display to be spread at least by a factor of 1.75 in said first reflected optical spectrum and **in that**, on the other hand, said lateral chromatism is small enough for the dispersion of a first spectrum emitted by said display and seen by a user to be less than or equal to the resolution limit of the human eye.

**2.** The display system according to claim 1, **characterised in that** said combiner also reflects in a second optical spectrum of second spectral width centred in the red, the lateral chromatism of said optical system being strong enough for the sunspot received by said display to be spread at least by a factor of 3.5 in a spectral field comprising the first and second reflected optical spectra, the lateral chromatism of said optical system being weak enough for the dispersion of the second spectrum emitted by said display and seen by a user to be less than or equal to the resolution limit of the human eye.

**3.** The display system according to any one of the preceding claims, **characterised in that** said combiner (3) comprises at least one flat semi-reflective plate.

**4.** The display system according to any one of claims 1 to 2, **characterised in that** said combiner (3) comprises at least one curved semi-reflective plate.

**5.** The display system according to any one of the preceding claims, **characterised in that** said optical system comprises at least one prismatic optical element (4).

**6.** The display system according to any one of the preceding claims, **characterised in that** said display (1) comprises a flat liquid crystal matrix screen illuminated by a narrow band monochromatic source.

**7.** The display system according to claim 6, **characterised in that** said narrow band monochromatic source comprises one or more lasers or laser diodes of a first type emitting at a first wavelength.

**8.** The display system according to claim 7, **characterised in that** said flat matrix screen is illuminated by one or more lasers or laser diodes of a second type emitting at a second wavelength.

**9.** The display system according to any one of the preceding claims, **characterised in that** said system comprises means for generating a digital image on said display, said means comprising means for applying a distortion correction to the image, said correction depending on the geometric distortion and the lateral chromatism of the optical assembly comprising said optical system and said combiner.

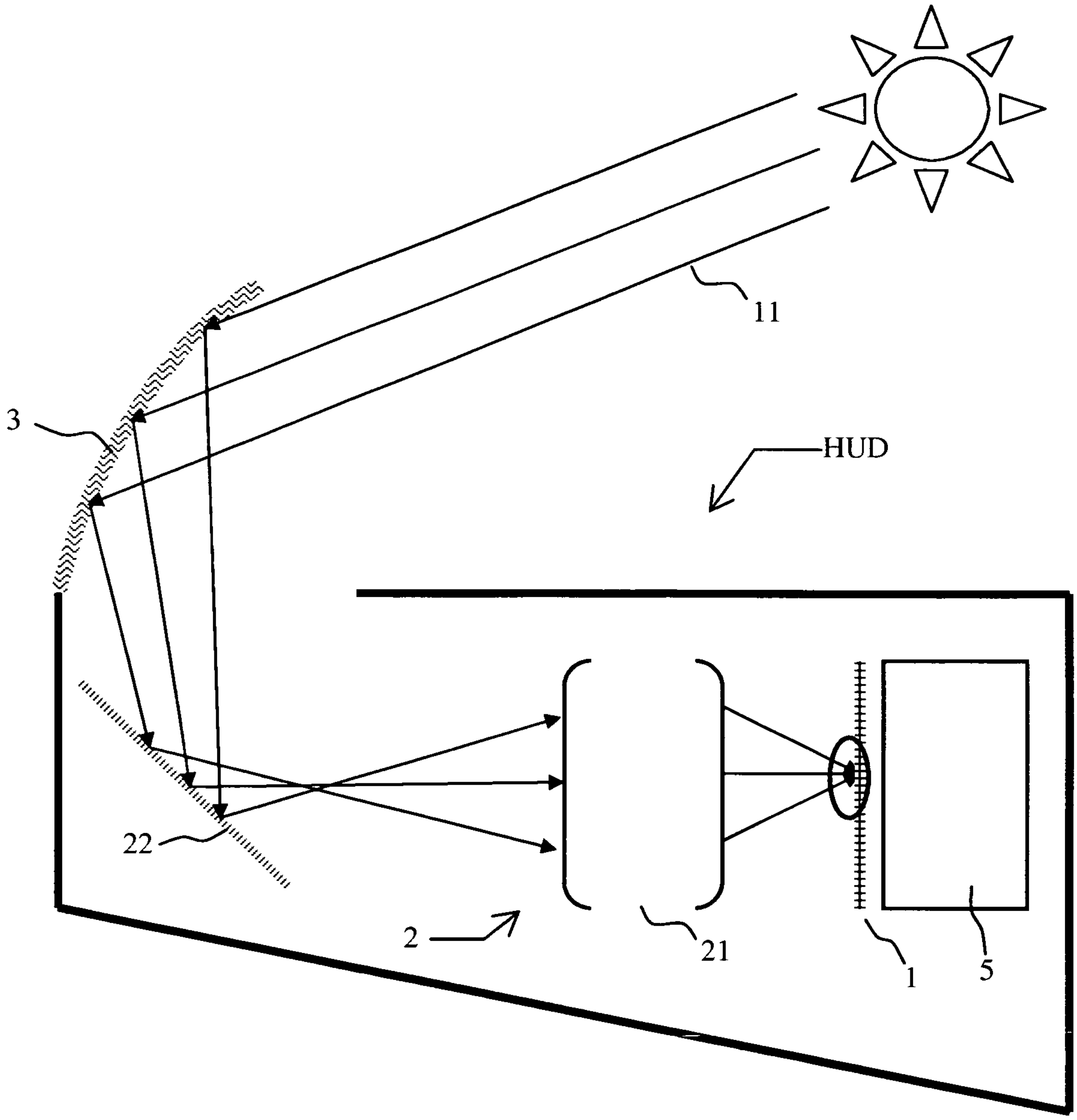


FIG. 1

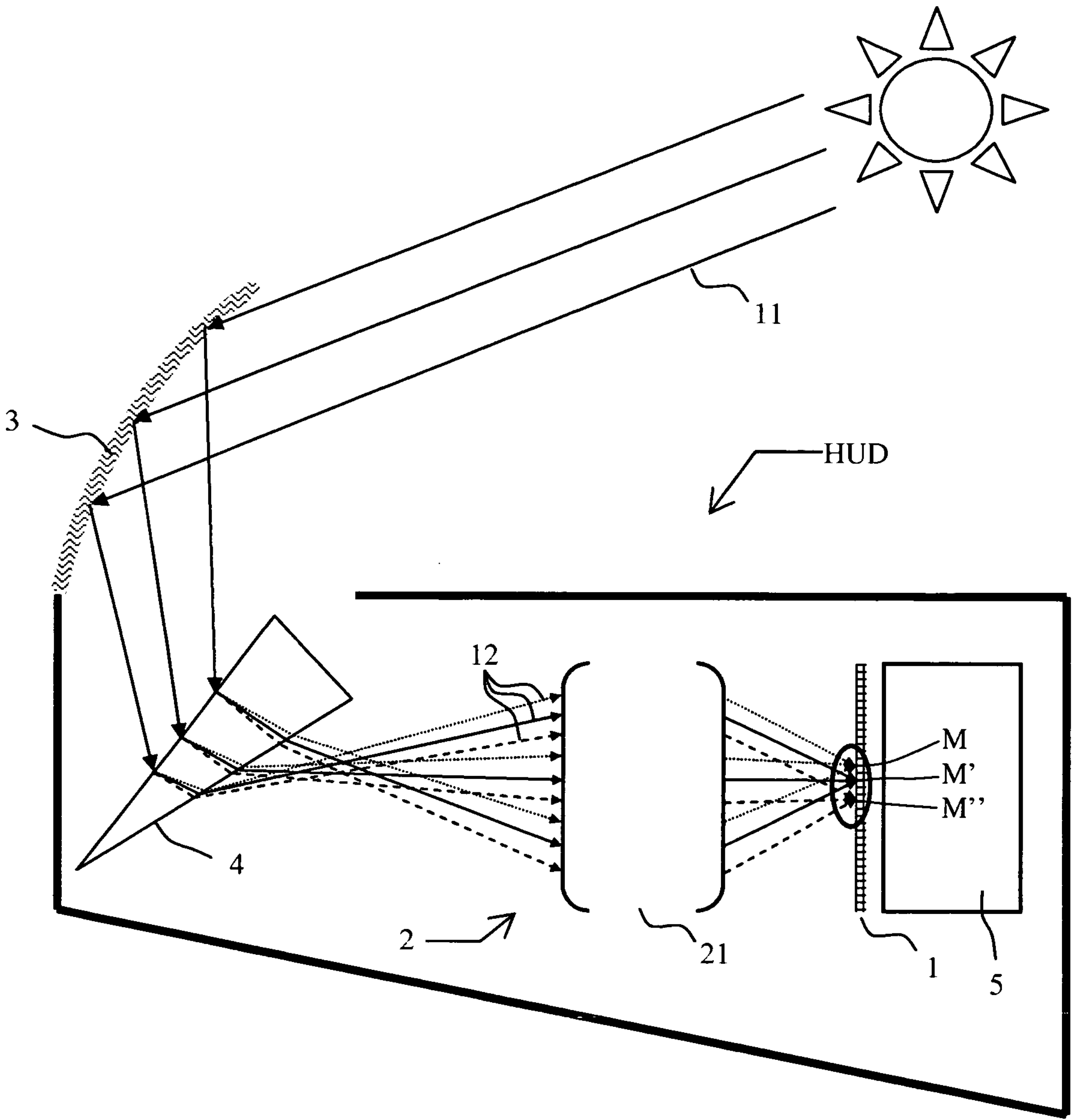


FIG. 2

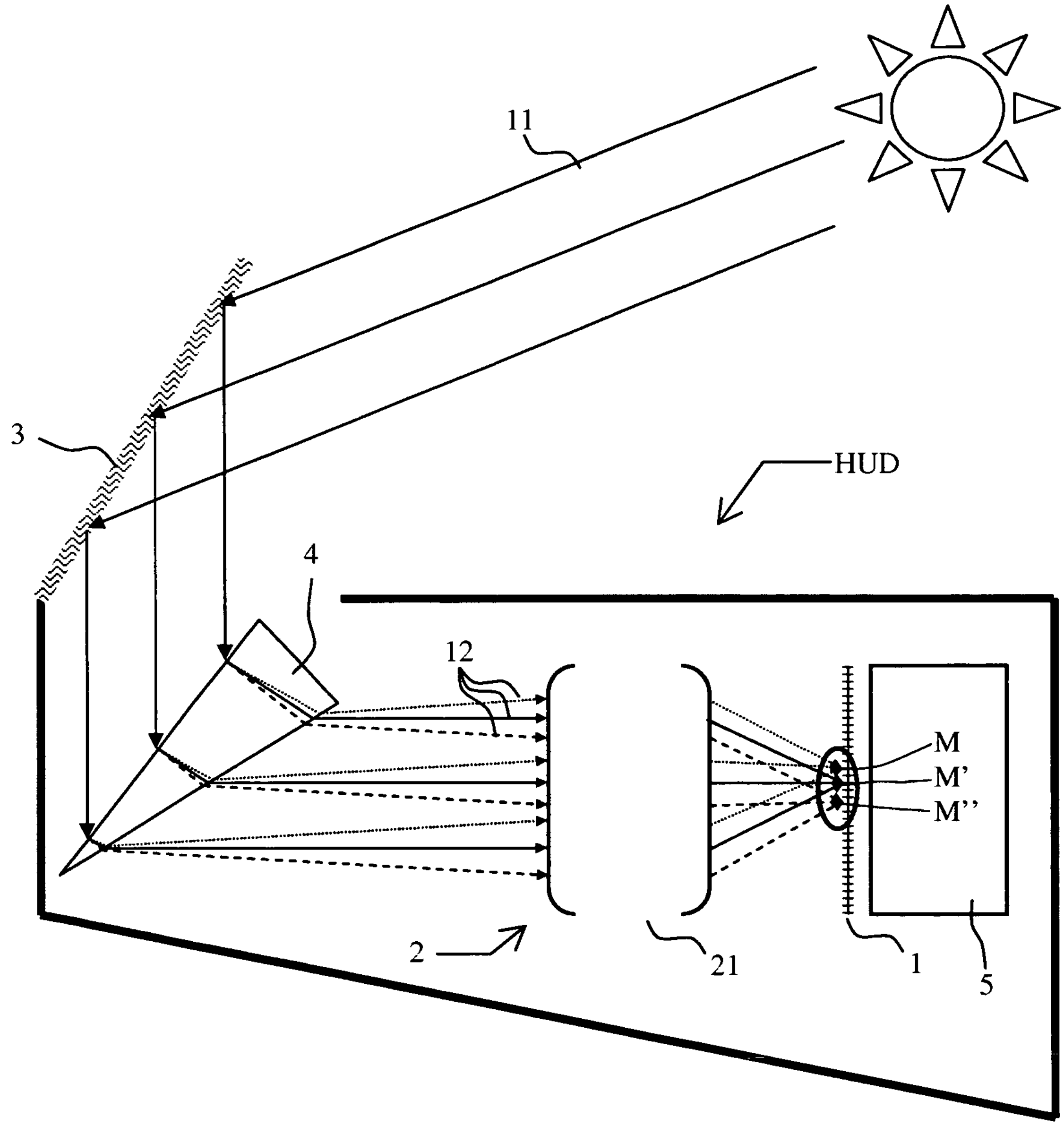


FIG. 3

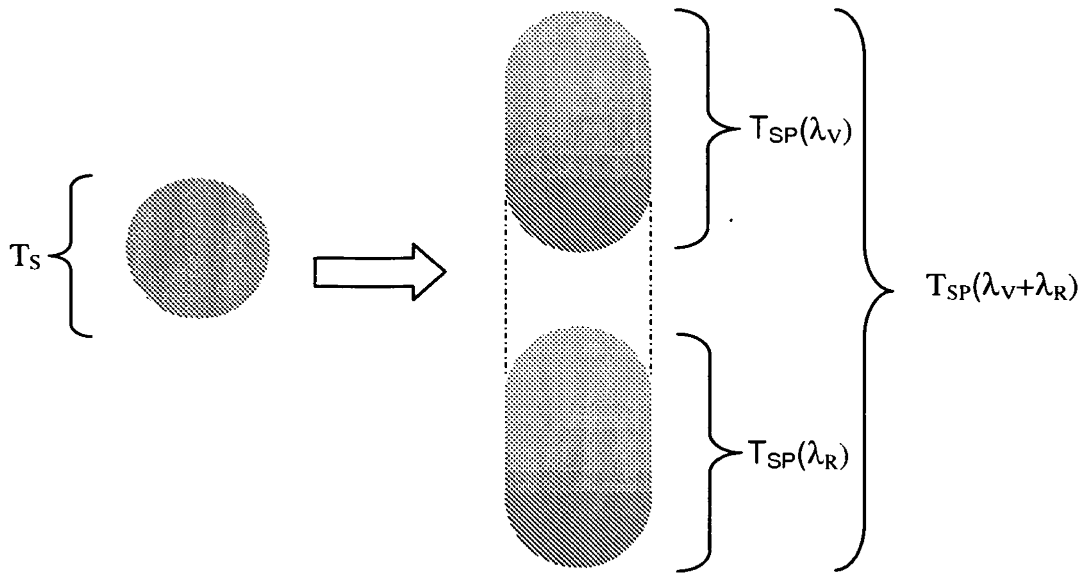
$T_S$
$T_{SP}(\lambda_V)$
$T_{SP}(\lambda_V+\lambda_R)$
$T_{SP}(\lambda_R)$

FIG. 4

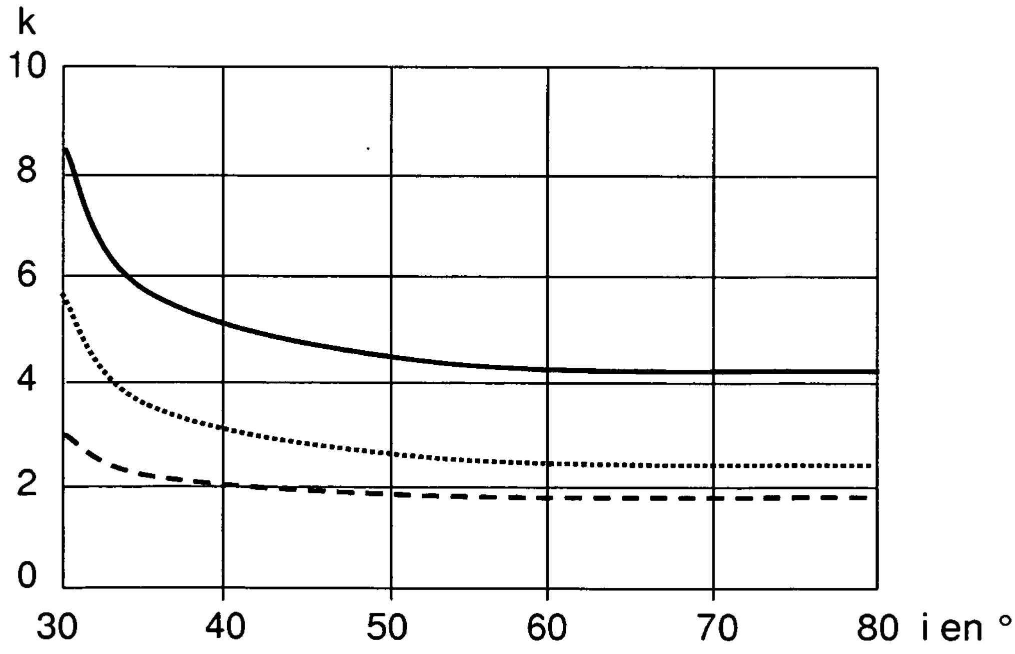
k
10
8
6
4
2
0
30
40
50
60
70
80
i en °

FIG. 5

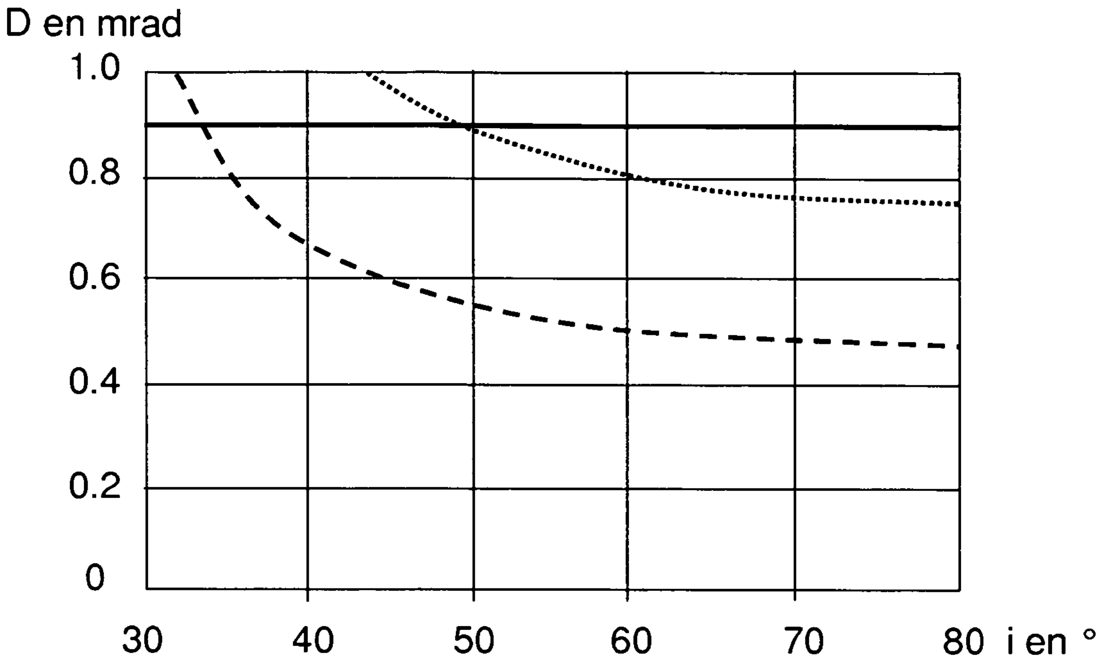


FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6574048 B2
- WO 2008109231 A2
- WO 1984002197 A